(19) **Europäisches Patentamt**
**European Patent Office**
**Office européen des brevets**

(11) **EP 3 838 628 B1**

(12) **EUROPEAN PATENT SPECIFICATION**

(45) Date of publication and mention
of the grant of the patent:
**04.10.2023 Bulletin 2023/40**

(21) Application number: **20214104.0**

(22) Date of filing: **15.12.2020**

(51) International Patent Classification (IPC):
***B60C 11/24*** *(2006.01)* ***B60C 23/04*** *(2006.01)*

(52) Cooperative Patent Classification (CPC):
**B60C 11/246; B60C 23/064; B60C 23/065**

(54) **METHOD OF ESTIMATING TIRE CONDITIONS**

VERFAHREN ZUR FESTSELLUNG VON REIFENZUSTÄNDEN

MÉTHODE DE DÉTERMINATION DE CONDITIONS D'UN PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2019 US 201962948880 P
28.10.2020 US 202017082380**

(43) Date of publication of application:
**23.06.2021 Bulletin 2021/25**

(73) Proprietor: **The Goodyear Tire & Rubber Company
Akron, OH 44316 (US)**

(72) Inventors:
• **KELLY, Brandon Charles
Hudson, Ohio 44236 (US)**

• **MILLIREN, Mark Robert
Copley, Ohio 44321 (US)**
• **MORRIS, Brian Richard
Canton, OH 44721 (US)**

(74) Representative: **Kutsch, Bernd
Goodyear S.A.
Patent Department
Avenue Gordon Smith
7750 Colmar-Berg (LU)**

(56) References cited:
**EP-A2- 2 078 624 WO-A1-2018/005972**

## Description

### Field of the Invention

The invention relates generally to tire monitoring systems. More particularly, the invention relates to systems that predict or estimate conditions of a tire, such as wear and pressure. The invention is directed to a method of estimating conditions of a tire including tread depth or wear state, pressure and dual-tire mismatch by sensing vibrational data and analyzing the data with a machine learning technique.

### Background of the Invention

Tires include various conditions that are beneficial to monitor and estimate, particularly as the tires age. Such conditions include tire wear, tire pressure, and mismatch of dual tires.

Tire wear plays an important role in vehicle factors such as safety, reliability, and performance. As the tire wears, the tread and loses material and directly affects such vehicle factors. As a result, it is desirable to monitor and/or measure the tread depth of a tire, which directly correlates to the amount of wear experienced by the tire. It is to be understood that for the purpose of convenience, the term "tread depth" shall be used, which indicates the degree of wear of the tire.

One approach to the monitoring and/or measurement of tread depth has been through the use of sensors disposed in the tire tread, which has been referred to as a direct method or approach. For example, a sensor is embedded in the tread, and as the tread depth decreases with tire wear, electrical properties of the sensor change, such as the electrical resistance. Some prior art techniques correlate the change in electrical properties to a loss of material from the tread, while other techniques correlate the change in electrical properties to a depth of material that remains on the tread. The direct approach to measuring tire depth from tire-mounted sensors has multiple challenges. Placing the sensors in an uncured or "green" tire to then be cured at high temperatures may cause damage to the sensors. In addition, sensor durability can prove to be an issue in meeting the millions of cycles requirement for tires. Moreover, the sensors in a direct measurement approach must be small enough not to cause any uniformity problems as the tire rotates at high speeds. Finally, the sensors can be expensive and add significantly to the cost of the tire.

Due to such challenges, alternative approaches have been developed, which involve prediction of tread depth over the life of the tire, including indirect estimations of the tread depth or tire wear state. These alternative approaches have experienced certain disadvantages in the prior art due to a lack of optimum prediction techniques, which reduces the accuracy and/or reliability of the tread depth or wear predictions. For example, many such techniques involve data or information that are not easily obtained or data that are not accurate under all driving conditions.

Regarding tire pressure, pneumatic tires are filled with air to a recommended inflation pressure. However, pneumatic tires are subject to air pressure losses due to puncture by nails and other sharp objects, temperature changes, and/or diffusion of air through the tire itself. Such pressure losses may lead to reduced fuel economy, tire life, and/or tire performance.

Tire pressure monitoring systems (TPMS) have been developed, which are automated systems that alert drivers and/or central systems when the air pressure in the vehicle tires drops below a predetermined level. Such systems often employ sensors in each tire that are expensive. Also, TPMS sensors may be difficult to install and may thus be installed improperly, which leads to inaccurate measurements by the sensors. Moreover, some sensors encounter reduced accuracy and/or reliability, which in turn undesirably reduces the pressure estimations generated by the system.

In addition, certain vehicles, such as heavy-duty vehicles, are equipped with dual tires, in which a pair of tires is mounted on each end of an axle, for a total of four tires on the axle. It is desirable for both tires in each pair to match one another to optimize the life and performance of the tires. For example, the tires should be of the same size, of the same outside diameter, have about the same inflation pressure and/or about the same tread depth. When both tires in each pair are not of the same size, are not of the same outside diameter, do not have about the same inflation pressure or do not have about the same tread depth, a mismatch occurs. Such mismatches are referred to as dual-tire mismatches, and may undesirably reduce the life and/or performance of one or both tires in the pair.

As a result, there is a need in the art for a method that accurately and reliably estimates conditions of a tire including tread depth, pressure and dual-tire mismatch.

EP 2 078 624 A2 describes a method in accordance with the preamble of claim 1.

WO 2018/005972 A1 discloses a computer-based method to facilitate detecting wheel imbalance, a tire pressure problem or excessive tread wear.

### Summary of the invention

The invention relates to a method in accordance with claim 1.

Dependent claims refer to preferred embodiments of the invention.

According to an exemplary embodiment of the invention, a method for estimating a condition of a tire is provided. The tire supports a vehicle and is mounted on a wheel, which is rotatably mounted on an axle. The method includes the steps of mounting a sensor on at least one of the tire, the wheel, the axle, and a component of the brake system. Vibrational data is measured with the sensor. The data from the sensor is transmitted to a processor. The data is processed in the processor and the processed data is normalized. At least one of the normalized data and pre-processed data is input into a machine learning model. A condition estimation for the tire is generated, which includes at least one of a tread depth of the tire, a pressure of the tire, and a dual tire mismatch.

Brief Description of the Drawings

The invention will be described by way of example and with reference to the accompanying drawings, in which:

Figure 1 is a schematic side view of a vehicle with tires that employ an exemplary embodiment of the method of estimating tire conditions of the present invention;

Figure 2 is an enlarged perspective view of a portion of the vehicle and dual-tire configuration shown in Figure 1;

Figure 3 is a schematic perspective view, partially in section, of a tire and wheel shown Figure 1;

Figure 4 is a plan view of a portion of a tire and wheel shown in Figure 1 mounted on axle;

Figure 5 is a graphical representation showing a shift in vibration frequency with tire wear;

Figure 6 is a general flow diagram showing a time domain signal of tire vibration input into a machine learning algorithm to generate predictions in accordance with exemplary steps of the method of estimating tire conditions of the present invention;

Figure 7 is a schematic representation of an aspect of an optional deep learning model that may be employed in the method of estimating tire conditions of the present invention;

Figure 8 is a schematic representation of an aspect of an optional support vector machine model that may be employed in the method of estimating tire conditions of the present invention;

Figure 9 is a schematic representation of a computing structure that may be employed in the method of estimating tire conditions of the present invention; and

Figure 10 is a flow diagram showing exemplary steps of the method of estimating tire conditions of the present invention.

Similar numerals refer to similar parts throughout the drawings.

Definitions

"Axial" and "axially" means lines or directions that are parallel to the axis of rotation of the tire.
"CAN bus" or "CAN bus system" is an abbreviation for controller area network system, which is a vehicle bus standard designed to allow microcontrollers and devices to communicate with each other within a vehicle without a host computer. CAN bus is a message-based protocol, designed specifically for vehicle applications.
"Circumferential" means lines or directions extending along the perimeter of the surface of the annular tread perpendicular to the axial direction.
"Equatorial centerplane (CP)" means the plane perpendicular to the tire's axis of rotation and passing through the center of the tread.
"Footprint" means the contact patch or area of contact created by the tire tread with a flat surface as the tire rotates or rolls.
"Inboard side" means the side of the tire nearest the vehicle when the tire is mounted on a wheel and the wheel is mounted on the vehicle.
"Lateral" means an axial direction.
"Lateral edges" means a line tangent to the axially outermost tread contact patch or footprint of the tire as measured under normal load and tire inflation, the lines being parallel to the equatorial centerplane.
"Net contact area" means the total area of ground contacting tread elements between the lateral edges around the entire circumference of the tread of the tire divided by the gross area of the entire tread between the lateral edges.
"Outboard side" means the side of the tire farthest away from the vehicle when the tire is mounted on a wheel and the wheel is mounted on the vehicle.
"Radial" and "radially" means directions radially toward or away from the axis of rotation of the tire.
"Tread element" or "traction element" means a block element defined by a shape having adjacent grooves.
"Tread Arc Width" means the arc length of the tread of the tire as measured between the lateral edges of the tread.

Detailed Description of Example Embodiments of the Invention

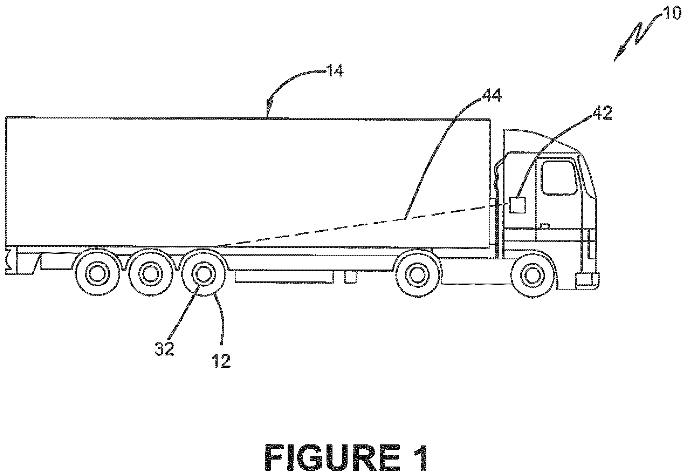

An exemplary embodiment of the method of estimating tire conditions of the present invention is indicated at 10 and is shown in Figures 1 through 10. The method of estimating tire conditions 10 attempts to overcome the challenges posed by prior art methods that measure tire conditions, including tread depth, pressure and dual-tire mismatch, through direct measurements. As such, the subject method is referred herein as an "indirect" condition estimation method.
With particular reference to Figure 1, the method 10 is employed to estimate certain conditions, to be described below, of on one or more tires 12 supporting a vehicle 14. While the vehicle 14 is depicted as a commercial truck, the invention is not to be so restricted. The principles of the invention find application in other vehicle categories, such as passenger vehicles, off-the-road vehicles and the like, in which vehicles may be supported by more or fewer tires than shown in Figure 1.

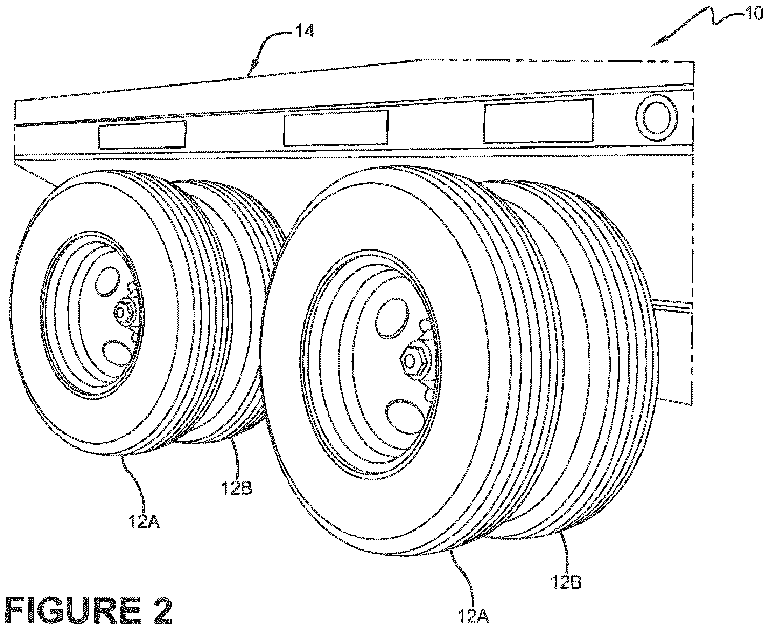

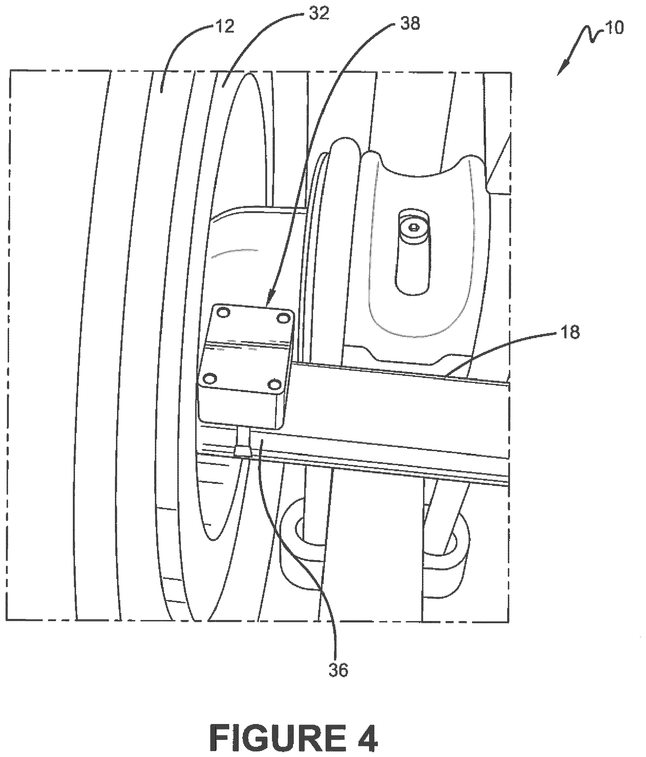

With additional reference to Figure 2, the vehicle 14 may include a dual-tire configuration. A dual tire configuration includes a pair of tires 12A and 12B mounted adjacent one another on a respective end of an axle 18 (Figure 4).

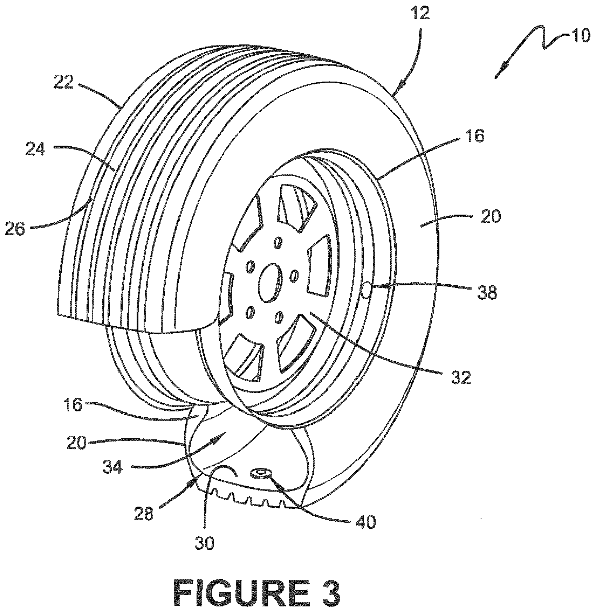

Turning to Figure 3, the tire 12 includes a pair of bead areas 16, each one of which is formed with a bead core. Each one of a pair of sidewalls 20 extends radially outwardly from a respective bead area 16 to a ground-contacting tread 22. The tread 22 is formed with multiple tread elements 24 that are separated by grooves 26 extending in circumferential, lateral and/or angular directions. The tire 12 is reinforced by a carcass 28 that toroidally extends from one bead area 16 to the other bead area, as known to those skilled in the art. An innerliner 30 is formed on the inner or inside surface of the carcass 28. The tire 10 is mounted on a wheel 32, as known in the art, and defines a cavity 34 when mounted. Each wheel 32 is rotatably mounted on a respective axle 18 (Figure 4) in a manner known to those skilled in the art.

As shown in Figures 3 and 4, a first sensor 38 is mounted to the wheel 32, the tire 12, an end 36 of the axle 18 inboardly of the wheel, or to a component of the vehicle brake system proximate the tire. The first sensor 38 may be mounted to an outboard or inboard surface of the wheel 32, to an internal or external surface of the tire 12, to an internal or external surface of the axle 18, or to a bracket attached to a disc foundation brake or a cam tube of a drum foundation brake. The first sensor 38 preferably is an accelerometer, which is an electromechanical sensor that measures acceleration forces associated with vibration of the wheel 32 and/or the tire 12. Preferably, the accelerometer 38 measures at least vertical acceleration of the wheel 32, which yields vibrational data. More preferably, the accelerometer 38 measures vertical, lateral and longitudinal acceleration of the wheel 32 to yield vibrational data. More than one accelerometer 38 may be employed, with the accelerometers being disposed in different locations on the tire 12, wheel 32 and/or axle 18.

A second sensor 40 is mounted proximate the first sensor 38. The second sensor may be mounted to the wheel 32, the tire 12, the end 36 of the axle 18 inboardly of the wheel, or to a component of the vehicle brake system proximate the tire. The second sensor 40 may be mounted to an outboard or inboard surface of the wheel 32, to an internal or external surface of the tire 12, to an internal or external surface of the axle 18, or to a bracket attached to a disc foundation brake or a cam tube of a drum foundation brake. The second sensor 40 may be mounted to the same surface as the first sensor 38, or to a different surface that is near the surface on which the first sensor is mounted.

The second sensor 40 preferably is an acoustic sensor, which may be a microphone, or other known type of sensor for collecting acoustic signal data of the tire 12 and/or the wheel 32 as they rotate during operation of the vehicle 14. When the second sensor 40 is employed, the acoustic signal data from the acoustic sensor 40 yields vibrational data that supplements the vibrational data from the accelerometer 38.

The sensors 38 and 40 may be separate units, as shown, or may be integrated into a single unit. In addition, one or both of the sensors 38 and 40 may be integrated into a tire pressure monitoring system (TPMS) sensor, which is a sensor for measuring the temperature and pressure in the tire cavity 34, and which may be mounted to the innerliner 30 or to another component of the tire 12 or to the wheel 32.

With additional reference to Figure 1, each sensor 38, 40 includes means for transmitting the sensed or measured data to a processor 42. The processor 42 may be a locally disposed processor that is mounted on the vehicle 14, in which case the transmission means may include a wired connection or a wireless connection 44 between the processor and the sensors 38, 40. The processor 42 and the sensors 38, 40 may also be electrically connected to an electronic control system of the vehicle, such as the vehicle CAN bus, which enables communication between the sensors and the processor.

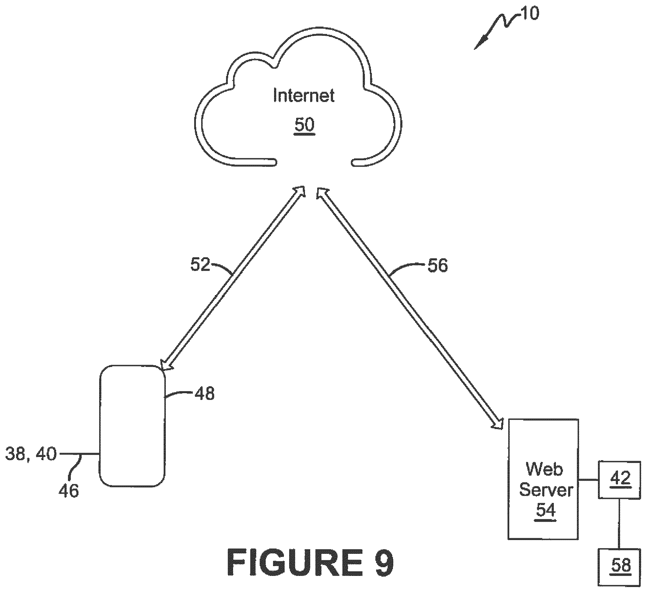

Referring to Figure 9, the processor 42 may be a remote processor, in which case the transmission means preferably include an antenna electrically connected to each sensor 38, 40 for wirelessly transmitting the measured data to the processor. For example, each sensor 38, 40 may be wireless connected 46 to a vehicle-mounted transmitter 48, which is connected to the Internet 50 through a wired or wireless connection 52. A server 54 is also connected to the Internet 50 through a wired or wireless connection 56 and includes or is in electronic communication with the processor 42 and storage means 58 to execute the steps of the method of estimating tire conditions 10.

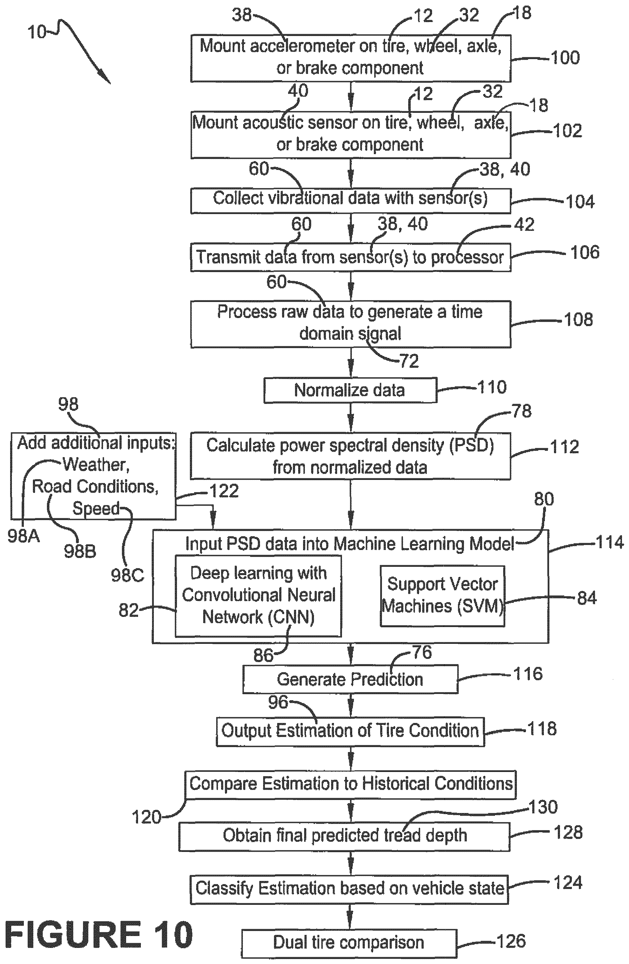

Turning to Figure 10, exemplary steps of the method of estimating tire conditions 10 are shown. The method includes mounting the accelerometer 38 to the wheel 32, the tire 12, the axle 18 or to a component of the vehicle brake system proximate the tire, step 100. When the acoustic sensor 40 is employed, it is mounted to the wheel 32, the tire 12, the axle 18 or to a component of the vehicle brake system proximate the tire, step 102. Each sensor 38, 40 collects raw vibrational data, step 104, and transmits the data to the processor 42 as described above, step 106.

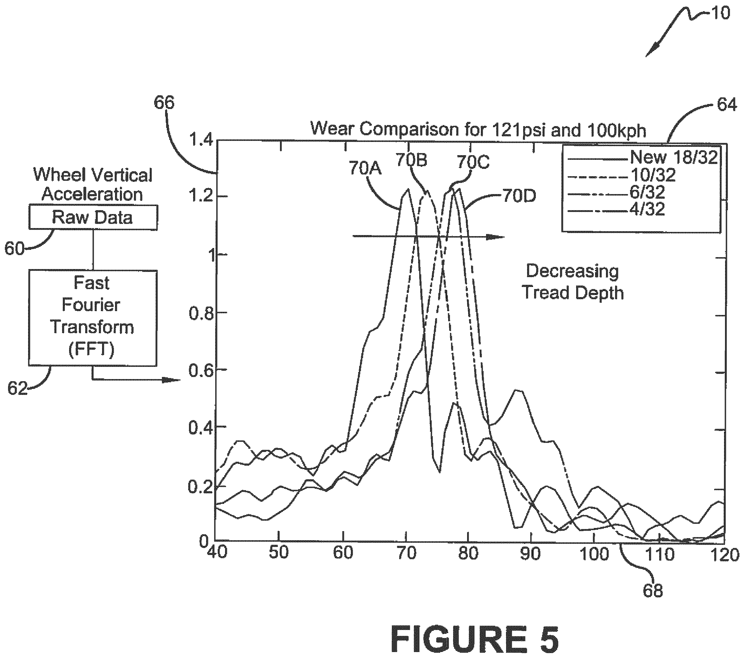

The processor 42 collects the data from the sensors 38, 40 and executes an analysis of the data. More particularly, with additional reference to Figure 5, the raw vibrational data 60 from each sensor 38, 40 may be processed using a Fast Fourier Transform 62, step 108. The Fast Fourier Transform 62 is an algorithm computes the discrete Fourier Transform of a sequence and is employed to convert the signals from the sensors 38, 40 from their original domains to representations in a frequency or time domain.

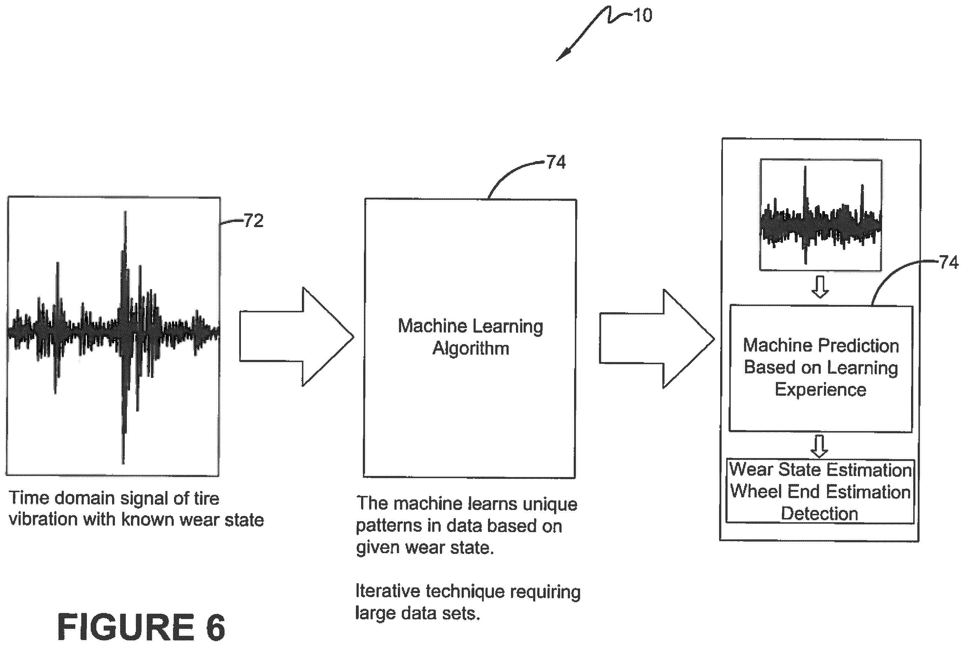

Referring now to Figures 6 and 10, an example of a resulting time domain signal of tire vibration is indicated at 72. The vibration data 72 are processed on the processor 42 using a machine learning technique 74 to yield a prediction or estimation 76, as will be described in greater detail below. To prepare the vibration data 72 for analysis, the data are normalized, step 110, by subtracting a linear trend and normalizing to unit variance.

Once the vibration data 72 have been normalized, a power spectral density (PSD) 78 preferably is calculated, step 112, as the power spectral density for the data provide improved processing in the machine learning technique 74. It is to be understood that pre-processing of the vibration data 72 other than by calculation of the PSD 78 may be employed in step 112. Alternatively, depending on the vibration data 72, no pre-processing may be necessary and thus would not be employed. For the purpose of convenience, reference shall be made to the use of PSD data 78, with the understanding that step 112 may involve other pre-processing techniques or may not be performed.

The machine learning technique 74 includes inputting any PSD data 78 into a machine learning model 80, step 114. While a variety of machine learning models 80 may be employed, a first preferred model or technique is a deep learning model 82 and a second preferred model or technique is a support vector machine (SVM) algorithm or model 84. Deep learning 82 is a machine learning model or technique 80 that excels at analyzing unstructured data, including the vibration data 72 and any corresponding PSD data 78. Deep learning 82 employs algorithms that combine feature construction, modeling, and prediction into a single end-to-end system, and thus reduces unstructured data to an information-dense representation that is optimized for prediction.

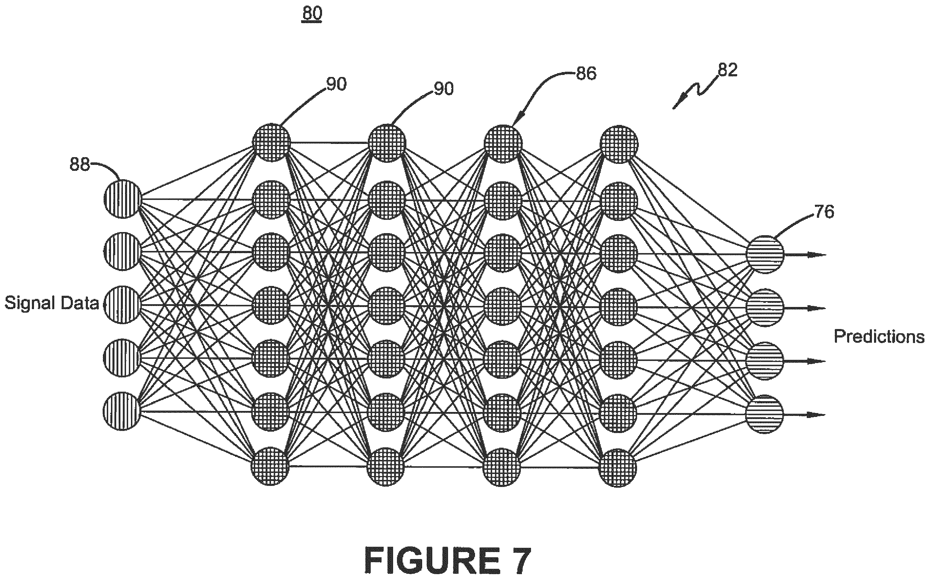

A preferred technique for deep learning 82 in the method of estimating tire conditions 10 is a convolutional neural network (CNN) 86. The CNN 86 employs a multilayer neural network. The layers of the CNN 86 include an input layer, an output layer, and a hidden layer that includes multiple convolutional layers, pooling layers, fully connected layers and normalization layers. An example of an aspect of the CNN 86 is shown in Figure 7, which schematically illustrates layers of the CNN. Input vectors 88 corresponding to the PSD data 78 of the vibration data 72 are fed into to the connected network 90. The network 90 generates the predictions 76 of tire conditions. In this manner, the CNN 86 is trained with data to provide effective predictions 76.

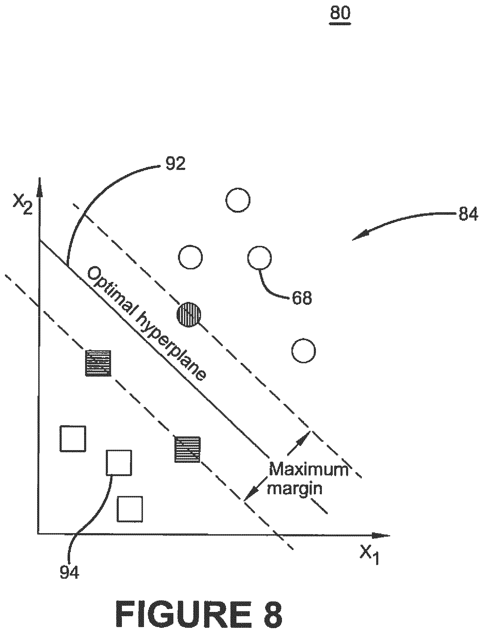

The support vector machine algorithm (SVM) 84 is an alternative machine learning model or technique 80. As shown in Figure 8, SVM 84 includes locating a hyperplane 92 that classifies data points 94. The SVM analysis 84 includes generating predictions 76 of tire conditions from similar data points 94 using the PSD data 78.

Returning to Figure 10, in step 116, the machine learning model 80 thus generates the predictions 76 of conditions of the tire 12. A resulting estimation 96 based on the predictions 76 is then output, step 118.

Identification (ID) information for the tire 12 may be provided in a memory unit of one or both of the sensors 38, 40 or may be stored in a separate unit, referred to as a tire ID tag. The tire ID information is transmitted to the processor 42 to enable correlation of the tire condition estimation 96 to the specific tire 12. Such tire identification enables the estimation 96 to be compared to data of historical conditions for the tire 12, step 120, to increase the fidelity or accuracy of the method 10.

For example, the storage means 58 (Figure 9) that are in communication with the processor 42 may include a database that stores estimations 96 of the tread depth of each tire 12 over time. When the machine learning model 80 outputs a new estimation 96, the new estimation may be compared to the historical data in step 120. The new estimation 96 is added to historical estimates over a look-back period of time, and a final predicted tread depth 130 is obtained by combining all estimates over the historical period, step 128. In addition, in step 128, if new estimation 96 consistently shows a higher tread depth when compared to recent historical data, a conclusion may be drawn that there has been a replacement of the tire 12.

To further increase the fidelity or accuracy of the method 10, additional inputs 98 may be employed. For example, weather conditions 98A may be obtained from the Internet 50 (Figure 9) based on a geographic location of the vehicle 14, road conditions 98B may be obtained from the Internet based on the geographic location of the vehicle using a global positioning system (GPS) or from a road friction estimation calculator as known to those skilled in the art, and/or a speed 98C of the vehicle may be obtained from a speedometer or a GPS calculation through the CAN bus system. One or more of the additional inputs 98 are provided through the processor 42 to the machine learning model 80. By taking such additional inputs 98 into account, the accuracy of the estimation 96 and/or the final predicated tread depth 130 generated by the model 80 is further increased.

Optionally, the estimation 96 and/or the final predicted tread depth 130 may be classified based on the state of the vehicle 14, step 124. For example, the state of the vehicle 14 may be monitored. For example, in step 124, it may be determined if the vehicle 14 is moving, such as by obtaining a speedometer signal or a GPS calculation through the CAN bus. It may also be determined if the vehicle 14 is stationary and idling, or is stationary and running on its internal power unit, such as by obtaining engine engagement and brake engagement signals through the CAN bus. By classifying the estimation 96 and/or the final predicted tread depth 130 according to the additional criteria of the vehicle state, the accuracy of the estimation 96 and/or the final predicted tread depth 130 generated by the model 80 may be further increased.

Because the processor 42 may be electrically connected to other systems of the vehicle 14 through the CAN bus as described above, the final predicted tread depth 130 may be communicated to other control systems of the vehicle, such as an antilock braking system (ABS) and/or an electronic stability control system (ESC), to improve performance of such system.

In addition, each final predicted tread depth 130 may be compared in the processor 42 to a predetermined limit. If the final predicted tread depth 130 does not satisfy the predetermined limit, a notice may be transmitted through the CAN bus or other control system to a display that is visible to an operator of the vehicle 14, to a handheld device, such as an operator's smartphone, and/or to a remote management center. The method 10 thus may provide notice or a recommendation to a vehicle operator or a manager that one or more conditions of each tire 12 does not satisfy the predetermined limit, thereby enabling appropriate action to be taken.

Using tread depth as an example of a specific tire condition estimation 96, as shown in Figure 5, a plot 64 of vibration frequency 66 versus time 68 for tires 12 with diminishing tread depths 70A, 70B, 70C and 70D indicates a shift in vibration frequency with tire wear or decreasing tread depth. The relationship between vibration frequency 66 and wear of the tread 22 (Figure 3) may be represented by the following equation:

$$\omega = \sqrt{\frac{k_t}{m_t}}$$

Where $\omega$ is the vibration frequency, $m_t$ is the mass of the tread 22 and $k_t$ is a time-based constant. For a worn tire 12, a reduction in the mass of the tread $m_t$ causes an upward shift in vibration frequency $\omega$.

Returning to Figure 10, the machine learning model 80 employs the relationship between vibration frequency and tire wear or decreasing tread depth in step 114 to generate predictions 76 of tread depth of the tire 12 in step 116. A resulting estimation 96 of tread depth is output in step 118. Additional inputs 98 may be employed in the model 80 in step 122, and a comparison to historical conditions may be made in step 120, as well as classification based on the vehicle state in step 124. The resulting final predicted tread depth 130 thus is an accurate estimate that may be transmitted to the vehicle control systems and/or to the vehicle operator.

As described above, the estimation 96 preferably is correlated to tire identification information for each specific tire 12. Thus, when a vehicle 14 employs a dual-tire configuration with tires 12A and 12B as shown in Figure 2, the method of estimating tire conditions 10 may identify a mismatch between the tires. More particularly, in step 126, a tread depth estimation 96 and/or the final predicted tread depth 130 for the first tire 12A is compared to a tread depth estimation for the second tire 12B. If a difference in the estimations 96 and/or the final predicted tread depths 130 exceeds a predetermined threshold, a mismatch notice may be generated and transmitted as described above. For example, if the tread depth estimation 96 yields a difference in tread depth that is greater than 1,59 mm between the first tire 12A and the second tire 12B, a tread depth mismatch notice may be generated.

The machine learning model 80 employs the relationship between vibration frequency and pressure in step 114 to generate predictions 76 of pressure of the tire 12 in step 116. A resulting estimation 96 of tire pressure is output in step 118. Additional inputs 98 may be employed in the model 80 in step 122, and a comparison to historical conditions may be made in step 120 to obtain a final predicted tread depth 130, which may be classified based on the vehicle state in step 124. The resulting final predicted tread depth 130 thus is an accurate estimate that may be transmitted to the vehicle control systems and/or to the vehicle operator.

In step 126, the method of estimating tire conditions 10 may identify a pressure-related mismatch between dual tires 12A and 12B. More particularly, in step 126, a tire pressure estimation 96 for the first tire 12A is compared to a tire pressure estimation for the second tire 12B. If a difference in the estimations 96 exceeds a predetermined threshold, a mismatch notice may be generated and transmitted as described above. For example, if the pressure estimation 96 yields a difference that is greater than 34474 Pa between the first tire 12A and the second tire 12B, a pressure mismatch notice may be generated.

Optionally, the method of estimating tire conditions 10 may employ the vibrational data from the sensors 38, 40 to determine additional conditions of the tire 12, the wheel 32 and/or the vehicle 14. For example, the vibrational data from the sensors 38, 40 may be processed according to the steps described above to determine potential conditions including crown separation of one or more tires 12, irregular tire wear, flatspotting of the tires, imbalance of the wheels and/or tires, and/or potential brake component issues.

In this manner, the method of estimating tire conditions 10 of the present invention provides estimates 96 of conditions of the tire 12 by collecting vibrational data of the tire and/or the wheel 32 and analyzing the data with a machine learning technique 74. The method of estimating tire conditions 10 of the present invention accurately and reliably estimates conditions of the tire 12 including tread depth, pressure and dual-tire mismatch.

It is to be understood that the method of the above-described tire condition estimation system 10 may be altered or rearranged, or components or steps known to those skilled in the art omitted or added, without affecting the overall concept or operation of the invention. For example, the tire condition estimation system 10 finds application on any type of tire 12.

**Claims**

**1.** A method for estimating a condition of a tire (12) supporting a vehicle (14) and being mounted on a wheel (32), the wheel (32) being rotatably mounted on an axle (18), the method comprising the steps of:

mounting a sensor (38) on at least one of the tire (12), the wheel (32), the axle (18), and a component of the brake system;
measuring vibrational data (60) with the sensor (38);
transmitting the data from the sensor (38) to a processor (42);
processing the data in the processor (42);
normalizing the processed data;
inputting at least one of the normalized data and pre-processed data into a machine learning model (80); and
generating a condition estimation for the tire (12), wherein the condition estimation includes at least one of a tread depth of the tire, a pressure of the tire, and a dual tire mismatch; **characterized in that**
the sensor is a first sensor (38), and the method further comprises the steps of:

mounting a second sensor (40) on at least one of the tire (12), the wheel (32), the axle (18), and a component of the brake system; and
measuring vibrational data with the second sensor (40).

2. The method for estimating a condition of a tire of claim 1, wherein the first sensor (38) is an accelerometer.

3. The method estimating a condition of a tire of claim 1, wherein the second sensor (40) is an acoustic sensor.

4. The method for estimating a condition of a tire of at least one of the previous claims, wherein the step of transmitting the measured data to a processor (42) includes wirelessly transmitting the data to a remote processor.

5. The method for estimating a condition of a tire of at least one of the previous claims, wherein the processor (42) is mounted on the vehicle (14) and is electrically connected to an electronic control system of the vehicle (14).

6. The method for estimating a condition of a tire of at least one of the previous claims, wherein the step of normalizing the measured data includes subtracting a linear trend and normalizing to unit variance.

7. The method for estimating a condition of a tire of at least one of the previous claims, further comprising the step of calculating a power spectral density (78) from data generated in the step of normalizing the processed data, and the step of inputting at least one of the normalized data and pre-processed data into a machine learning model (80) includes inputting data from the power spectral density calculation into a deep learning model (82), preferably a convolutional neural network (86).

8. The method for estimating a condition of a tire of at least one of the previous claims, further comprising the step of calculating a power spectral density (78) from data generated in the step of normalizing the processed data, and the step of inputting at least one of the normalized data and pre-processed data into a machine learning model (80) includes inputting data from the power spectral density calculation into a support vector machine algorithm (84).

9. The method for estimating a condition of a tire of at least one of the previous claims, further comprising the step of providing identification information for the tire (12).

10. The method for estimating a condition of a tire of at least one of the previous claims, further comprising the step of comparing the condition estimation to historical conditions for the tire (12) to obtain a final predicted tread depth.

11. The method for estimating a condition of a tire of at least one of the previous claims, further comprising the step of classifying the condition estimation based on a state of the vehicle (14), and optionally, wherein the step of classifying the condition estimation based on a state of the vehicle (14) includes determining at least one of whether the vehicle is moving and whether the vehicle is stationary.

12. The method for estimating a condition of a tire of at least one of the previous claims, further comprising the step of inputting at least one of weather conditions, road conditions and vehicle speed into the machine learning model (80).

13. The method for estimating a condition of a tire of at least one of the previous claims, further comprising the step of communicating the condition estimation to at least one of at least one control system of the vehicle (14), an operator of the vehicle, and a remote management center, and/or further comprising the step of comparing the condition estimation to a predetermined limit, and transmitting a notice to at least one of at least one control system of the vehicle (14), an operator of the vehicle, and a remote management center if the condition estimation does not satisfy the predetermined limit.

14. The method for estimating a condition of a tire of at least one of the previous claims, wherein the step of generating a condition estimation for the tire (12) includes identifying a tread depth dual tire mismatch when a difference between a tire tread depth estimation for each tire (12) in a pair of dual tires exceeds a predetermined threshold, and/or wherein the step of generating a condition estimation for the tire (12) includes identifying a pressure dual tire mismatch when a difference between a tire pressure estimation for each tire (12) in a pair of dual tires exceeds a predetermined threshold.

**Patentansprüche**

1. Verfahren zur Schätzung eines Zustands eines Reifens (12), der ein Fahrzeug (14) trägt und an einem Rad (32) montiert ist, wobei das Rad (32) drehbar auf einer Achse (18) gelagert ist, wobei das Verfahren die Schritte umfasst des:

   Anbringens eines Sensors (38) an mindestens einem der Reifen (12), des Rades (32), der Achse (18) und einer Komponente der Bremsanlage,
   Messens von Schwingungsdaten (60) mit dem Sensor (38);
   Übertragens der Daten vom Sensor (38) an einen Prozessor (42);
   Verarbeitens der Daten in dem Prozessor (42);
   Normalisierens der verarbeiteten Daten;
   Eingebens mindestens einer der normalisierten Daten und der vorverarbeiteten Daten in ein Machine-Learning-Modell (80); und
   Erzeugens einer Zustandsschätzung für den Reifen (12), wobei die Zustandsschätzung mindestens eines von einer Profiltiefe des Reifens, einem Druck des Reifens und einer Doppelreifenfehlanpassung umfasst; **dadurch gekennzeichnet, dass**
   der Sensor ein erster Sensor (38) ist, und dass das Verfahren ferner die Schritte umfasst des:

   Montierens eines zweiten Sensors (40) an mindestens einem von dem Reifen (12), dem Rad (32), der Achse (18) und einer Komponente des Bremssystems; und
   Messens von Schwingungsdaten mit dem zweiten Sensor (40).

2. Verfahren zum Schätzen eines Zustandes eines Reifens nach Anspruch 1, wobei der erste Sensor (38) ein Beschleunigungssensor ist.

3. Verfahren zur Schätzung eines Zustands eines Reifens nach Anspruch 1, wobei der zweite Sensor (40) ein akustischer Sensor ist.

4. Verfahren zum Schätzen eines Zustands eines Reifens nach mindestens einem der vorhergehenden Ansprüche, wobei der Schritt des Übertragens der Messdaten an einen Prozessor (42) die drahtlose Übertragung der Daten an einen entfernten Prozessor umfasst.

5. Verfahren zum Schätzen eines Zustands eines Reifens nach mindestens einem der vorhergehenden Ansprüche, wobei der Prozessor (42) an dem Fahrzeug (14) montiert und mit einer elektronischen Steuerung des Fahrzeugs (14) elektrisch verbunden ist.

6. Verfahren zur Schätzung eines Zustands eines Reifens nach mindestens einem der vorhergehenden Ansprüche, wobei der Schritt des Normalisierens der Messdaten die Subtraktion eines linearen Trends und die Normalisierung auf Einheitsvarianz umfasst.

7. Verfahren zur Schätzung eines Zustands eines Reifens nach mindestens einem der vorhergehenden Ansprüche, das ferner den Schritt des Berechnens einer spektralen Leistungsdichte (78) umfasst, die aus Daten entstammt, die in dem Schritt des Normalisierens der verarbeiteten Daten erzeugt wurden, und wobei der Schritt des Eingebens von mindestens einer der normalisierten Daten und der vorverarbeiteten Daten in ein Machine-Learning-Modell (80), das Eingeben von Daten, die aus der Berechnung der spektralen Leistungsdichte entstammen, in ein Deep-Learning-Modell (82), vorzugsweise in ein faltungsneuronales Netz (86), umfasst.

8. Verfahren zur Schätzung eines Zustands eines Reifens nach mindestens einem der vorhergehenden Ansprüche, das ferner den Schritt des Berechnens einer spektralen Leistungsdichte (78) umfasst, die aus Daten entstammt, die in dem Schritt der Normalisierung der verarbeiteten Daten erzeugt wurden, und wobei der Schritt des Eingebens mindestens einer der normalisierten Daten und der vorverarbeiteten Daten in ein maschinelles Lernmodell (80), das Eingeben von Daten, die aus der Berechnung der spektralen Leistungsdichte entstammen, in einen Unterstützungsvektor-Maschinenalgorithmus (84), umfasst.

9. Verfahren zum Schätzen eines Zustands eines Reifens nach mindestens einem der vorhergehenden Ansprüche, das ferner den Schritt des Bereitstellens von Identifikationsinformationen für den Reifen (12) umfasst.

10. Verfahren zur Schätzung eines Zustands eines Reifens nach mindestens einem der vorhergehenden Ansprüche, das ferner den Schritt des Vergleichs der Zustandsschätzung mit historischen Bedingungen für den Reifen (12), um eine endgültige vorhergesagte Profiltiefe zu erhalten, umfasst.

11. Verfahren zur Schätzung eines Zustands eines Reifens nach mindestens einem der vorhergehenden Ansprüche, das ferner den Schritt der Klassifizierung der Zustandsschätzung auf der Grundlage eines Zustands des Fahrzeugs (14) umfasst, und optional, wobei der Schritt der Klassifizierung der Zustandsschätzung auf der Grundlage eines Zustandes des Fahrzeugs (14) zumindest eine Bestimmung, ob das Fahrzeug sich bewegt und ob das Fahrzeug steht, umfasst.

12. Verfahren zur Schätzung eines Zustands eines Reifens nach mindestens einem der vorhergehenden Ansprüche, das ferner den Schritt des Eingebens mindestens einer der Wetterbedingungen, den Straßenverhältnissen und der Fahrzeuggeschwindigkeit in das Machine-Learning-Modell (80) umfasst.

13. Verfahren zur Schätzung eines Zustands eines Reifens nach mindestens einem der vorhergehenden Ansprüche, das ferner den Schritt des Übermittelns der Zustandsschätzung an mindestens eines von der Steuerung des Fahrzeugs (14), einem Betreiber des Fahrzeugs und einer Fernverwaltungszentrale umfasst, und/oder weiter den Schritt des Vergleichs der Zustandsschätzung mit einem vorbestimmten Grenzwert und der Übermittlung einer Mitteilung an mindestens eines dem Kontrollsystem des Fahrzeugs (14), einem Betreiber des Fahrzeugs, und einer Fernverwaltungszentrale, wenn die Zustandsschätzung die vorgegebene Grenze nicht erfüllt, umfasst.

14. Verfahren zum Schätzen eines Zustands eines Reifens nach mindestens einem der vorhergehenden Ansprüche, wobei der Schritt des Generierens einer Zustandsschätzung für den Reifen (12) die Identifizierung einer Profiltiefendoppelreifenfehlanpassung umfasst, wenn eine Differenz zwischen einer Reifenprofiltiefenschätzung für jeden Reifen (12) in einem Paar Doppelreifen einen vorbestimmten Schwellenwert überschreitet, und/oder wobei der Schritt des Erzeugens einer Zustandsschätzung für den Reifen (12) die Identifizierung einer Druckdoppelreifenfehlanpassung umfasst, wenn eine Differenz zwischen einer Reifendruckschätzung für jeden Reifen (12) in einem Paar Doppelreifen eine vorbestimmte Schwelle überschreitet.

**Revendications**

1. Procédé destiné à une estimation d'une condition d'un bandage pneumatique (12) qui supporte un véhicule (14) et qui est monté sur une roue (32), la roue (32) étant montée en rotation sur un essieu (18), le procédé comprenant les étapes dans lesquelles :

on monte un capteur (38) sur au moins un élément choisi parmi le bandage pneumatique (12), la roue (32), l'essieu (18) et un composant du système de freinage ;
on mesure des données vibratoires (60) avec le capteur (38) ;
on transmet les données à partir du capteur (38) à un processeur (42) ;
on traite les données dans le processeur (42) ;
on normalise les données qui ont été traitées ;
on entre au moins une donnée choisie parmi les données qui ont été normalisées et les données qui ont été prétraitées dans un modèle d'apprentissage automatique (80) ; et
on génère l'estimation d'une condition pour le bandage pneumatique (12) ; dans lequel l'estimation d'une condition englobe au moins une condition choisie parmi une profondeur de sculpture de la bande de roulement du bandage pneumatique, une pression du bandage pneumatique, et une discordance entre des bandages pneumatiques jumelés ; **caractérisé en ce que**
le capteur est un premier capteur (38) et le procédé comprend les étapes dans lesquelles :

on monte un deuxième capteur (40) sur au moins un élément choisi parmi le bandage pneumatique (12), la roue (32), l'essieu (18) et un composant du système de freinage ; et
on mesure des données vibratoires avec le deuxième capteur (40).

2. Procédé destiné à une estimation d'une condition d'un bandage pneumatique selon la revendication 1, dans lequel le premier capteur (38) est un accéléromètre.

3. Procédé destiné à une estimation d'une condition d'un bandage pneumatique selon la revendication 1, dans lequel le deuxième capteur (40) est un capteur acoustique.

4. Procédé destiné à une estimation d'une condition d'un bandage pneumatique selon au moins une des revendications précédentes, dans lequel l'étape dans laquelle on transmet les données qui ont été mesurées à un processeur (42) englobe le fait de transmettre sans fil les données à un processeur à distance.

5. Procédé destiné à une estimation d'une condition d'un bandage pneumatique selon au moins une des revendications précédentes, dans lequel le processeur (42) est monté sur le véhicule (14) et est relié par voie électrique à un système de commande électronique du véhicule (14).

6. Procédé destiné à une estimation d'une condition d'un bandage pneumatique selon au moins une des revendications précédentes, dans lequel l'étape dans laquelle on normalise les données qui ont été mesurées englobe une soustraction d'une courbe linéaire et une normalisation à une variance unitaire.

7. Procédé destiné à une estimation d'une condition d'un bandage pneumatique selon au moins une des revendications précédentes, qui comprend en outre l'étape dans laquelle on calcule une densité spectrale de puissance (78) à partir de données qui ont été générées au cours de l'étape de normalisation des données qui ont été traitées, et l'étape dans laquelle on entre au moins une donnée choisie parmi les données qui ont été normalisées et les données qui ont été prétraitées dans un modèle d'apprentissage pneumatique (80) englobe le fait d'entrer des données à partir du calcul de la densité spectrale de puissance dans un modèle d'apprentissage en profondeur (82), de préférence dans un réseau neuronal convolutif (86).

8. Procédé destiné à une estimation d'une condition d'un bandage pneumatique selon au moins une des revendications précédentes, qui comprend en outre l'étape dans laquelle on calcule une densité spectrale de puissance (78) à partir de données qui ont été générées dans l'étape de normalisation des données qui ont été traitées, et l'étape dans laquelle on entre au moins une donnée choisie parmi les données qui ont été normalisées et les données qui ont été prétraitées dans un modèle d'apprentissage pneumatique (80) englobe le fait d'entrer des données à partir du calcul de la densité spectrale de puissance dans un algorithme d'une machine à vecteurs de support (84).

9. Procédé destiné à une estimation d'une condition d'un bandage pneumatique selon au moins une des revendications précédentes, qui comprend en outre l'étape dans laquelle on procure des informations d'identification pour le bandage pneumatique (12).

10. Procédé destiné à une estimation d'une condition d'un bandage pneumatique selon au moins une des revendications précédentes, qui comprend en outre l'étape dans laquelle on compare l'estimation d'une condition à des conditions historiques pour le bandage pneumatique (12) afin d'obtenir une profondeur de sculpture de bande de roulement prédite finale.

11. Procédé destiné à une estimation d'une condition d'un bandage pneumatique selon au moins une des revendications précédentes, qui comprend en outre l'étape dans laquelle on classe l'estimation d'une condition en se basant sur un état du véhicule (14), et de manière facultative, dans lequel l'étape dans laquelle on classe l'estimation d'une condition en se basant sur un état du véhicule (12), englobe le fait de déterminer au moins une inconnue à savoir le fait de savoir si le véhicule est en mouvement ou le fait de savoir si le véhicule est stationnaire.

12. Procédé destiné à une estimation d'une condition d'un bandage pneumatique selon au moins une des revendications précédentes, qui comprend en outre l'étape dans laquelle on entre au moins une condition choisie parmi des conditions météorologiques, des conditions de route et une vitesse du véhicule dans le modèle d'apprentissage pneumatique (80).

13. Procédé destiné à une estimation d'une condition d'un bandage pneumatique selon au moins une des revendications précédentes, qui comprend en outre l'étape dans laquelle on communique l'estimation d'une condition à au moins un élément choisi parmi un système de commande du véhicule (14), un conducteur du véhicule et un centre de gestion à distance, et/ou qui comprend en outre l'étape dans laquelle on compare l'estimation d'une condition à une limite prédéterminée et on transmet une notification à au moins un élément choisi parmi un système de commande du véhicule (14), un conducteur du véhicule et un centre de gestion à distance, lorsque l'estimation d'une condition ne correspond pas à la limite prédéterminée.

14. Procédé destiné à une estimation d'une condition d'un bandage pneumatique selon au moins une des revendications précédentes, dans lequel l'étape dans laquelle on génère une estimation d'une condition pour le bandage pneumatique (12) englobe le fait d'identifier une discordance entre les bandes de roulement de bandages pneumatiques jumelés lorsqu'une différence entre une estimation de la profondeur de sculpture de la bande de roulement pour chaque bandage pneumatique (12) dans une paire de bandages pneumatiques jumelés dépasse un seuil qui a été prédéterminé ; et/ou dans lequel l'étape dans laquelle on génère une estimation d'une condition pour le bandage pneumatique (12) englobe le fait d'identifier une discordance entre les pressions de bandages pneumatiques jumelés lorsqu'une différence entre une estimation de la pression pour chaque bandage pneumatique (12) dans une paire de bandages pneumatiques jumelés dépasse un seuil qui a été prédéterminé.

**FIGURE 1**

EP 3 838 628 B1

**FIGURE 2**

**FIGURE 3**

# FIGURE 4

Wheel Vertical
Acceleration

Raw Data

60

Fast
Fourier
Transform
(FFT)

62

66

Wear Comparison for 121psi and 100kph

64

70A  70B  70C

70D

New 18/32
10/32
6/32
4/32

Decreasing
Tread Depth

1.4

1.2

1

0.8

0.6

0.4

0.2

0

40    50    60    70    80    90    100   110   120

68

**FIGURE 5**

Time domain signal of tire vibration with known wear state

Machine Learning Algorithm

The machine learns unique patterns in data based on given wear state.

Iterative technique requiring large data sets.

Machine Prediction Based on Learning Experience

Wear State Estimation
Wheel End Estimation
Detection

**FIGURE 6**

EP 3 838 628 B1

FIGURE 7

**FIGURE 8**

EP 3 838 628 B1

**FIGURE 9**

10

38 ─ 12 ─32 ─18
Mount accelerometer on tire, wheel, axle,
or brake component ─100

40 ─ 12 ─32 ─18
Mount acoustic sensor on tire, wheel, axle,
or brake component ─102

60 ─ 38, 40
Collect vibrational data with sensor(s) ─104

60 ─ 38, 40 ─42
Transmit data from sensor(s) to processor ─106

60
Process raw data to generate a time
domain signal ─108
─72

Normalize data ─110
─78

98
Add additional inputs:
─Weather,
Road Conditions,
Speed─ ─122
98A ─ 98B ─ 98C

Calculate power spectral density (PSD)
from normalized data ─112

80
Input PSD data into Machine Learning Model ─114

Deep learning with
Convolutional Neural
Network (CNN)
82─ 86─

Support Vector
Machines (SVM) ─84

76
Generate Prediction ─116

96
Output Estimation of Tire Condition ─118

Compare Estimation to Historical Conditions
120─

─130
Obtain final predicted tread depth ─128

Classify Estimation based on vehicle state ─124

**FIGURE 10**

Dual tire comparison ─126

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2078624 A2

- WO 2018005972 A1